(19) Europäisches Patentamt
European Patent Office
Office européen des brevets

(11) **EP 3 839 870 A1**

(12) **EUROPEAN PATENT APPLICATION**

(43) Date of publication:
**23.06.2021 Bulletin 2021/25**

(51) Int Cl.:
***G06Q 50/02*** *(2012.01)*       ***G06Q 50/06*** *(2012.01)*

(21) Application number: **19398016.6**

(22) Date of filing: **20.12.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **Universidade de Trás-os-Montes e Alto Douro**
**5000-911 Vila Real (PT)**

(72) Inventors:
• **Fernandes, Luis Filipe Sanches**
**5000-911 Vila Real (PT)**
• **Terêncio, Daniela Patrício Salgado**
**5000-911 Vila Real (PT)**
• **Pacheco, Fernando António Leal**
**5000-911 Vila Real (PT)**
• **Moura, João Paulo**
**5000-911 Vila Real (PT)**
• **Cortes, Rui Manuel Vitor**
**5000-911 Vila Real (PT)**

(74) Representative: **Ferreira, Maria Silvina**
**Clarke, Modet & Co**
**Av. Casal Ribeiro, N°50-3° andar**
**1000-93 Lisboa (PT)**

(54) **METHODOLOGY TO DETERMINE LOCATIONS OF SYSTEMS FOR RAINWATER HARVESTING IN HYDROGRAPHIC BASINS**

(57) The present invention refers to a methodology to determine the locations that are favourable to the implementation of systems for rainwater harvesting, within hydrographic basins, for agricultural and forestry applications, namely irrigation and fire fighting. The methodology consists in a data acquisition stage, that is, the survey of the physical characteristics of the hydrographic basins being studied, the socioeconomic and ecological data thereof, whereby all data is registered in georeferenced thematic maps; followed by a space evaluation stage, where a spatial multicriteria analysis is carried out, based on the georeferenced maps and on a range of dynamic and adaptive considerations according to the scenario in question; at the end a classification of the possible locations for rainwater harvesting systems is obtained, assuring an irrigation by gravitational flow as well as a smaller environmental impact.

Figure 2

**Description**

**Technical field**

The present invention refers to a methodology to determine suitable locations for the implementation of rainwater harvesting systems, within hydrographic basins, bridging the gaps of hydric needs in agricultural and forest applications, such as the irrigation and forest fire combat.

**State of the art**

The harvesting of rainwater (RWH) is the collective term for many interventions that use rain by collecting and storing, through the soil, dams and reservoirs, in periods of draught (UNEP, 2009). The RWH promotes the increase of water productivity by mitigating the temporal and spatial variance of the rain, an improvement in the water retention in the landscape and permission to administrate and use rainwater for basic human needs and other small scale productive activities (Kahinda et al., 2008; Mesbah et al., 2016).

In areas with sparse populations or where the costs of the development of surface and subterranean water resources are high, the RWH and storage proved to be an accessible and sustainable intervention (Mati et al., 2006).

Examples of RWH applications are described in many articles, namely those related to the sizing of reservoirs, together with efficiency evaluations(Campisano and Modica, 2012; Hashemi et al., 2013; Imteaz et al., 2012; Pakparvar et al., 2016; Palla et al., 2011; Sanches Fernandes et al., 2015); or with climate zone and climate alteration analysis; the study of the potential of small cities for rainwater storage on the rooftops (Ghisi et al., 2006); the integration of the rainwater harvesting systems in the rainfall-drainage models to evaluate the contribution for mitigation of floods (Kim et al., 2012); the economic responsibility of the RWH (Domènech and Saurí, 2011; Hashim et al., 2013; Rahman et al., 2012); the evaluation of the RWH based on the energy nexus of the water (Vieira et al., 2014); discussion of health issues related to the use of domestic RWH (Helmreich and Horn, 2009); among others.

Recent classification systems discriminate between the utilization of rainwater *in situ* and ex *situ* (Ouessar et al., 2012). In the first case, the system uses the surface layer of the soil as storage means, while in the second case it comprises a retention component which is seized for the use that is dislocated from the rainfall collection area. Among the RWH *ex situ,* one may still distinguish among RWH *in-field* (IRWH), RWH *ex-field* (XRWH) and domestic RWH (DRWH) (Kahinda et al., 2008). The IRWH and XRWH systems are the most used in agroforestry applications, namely crop irrigation or fire fighting. The DRWH is mainly practiced in the domestic level, while the XRWH is rarely put into practice (Kahinda et al., 2008).

The limited use of RWH is related to the scarce attention paid to the social factors (Patrick, 1997; Rockstrom, 2000) and to the lack of scientifically verified information that may be used to indicate areas where the collection and storage of rainwater may be applied (Mati et al., 2006). One comprehensive model for locating suitable RWH places for agriculture was brought to the scientific literature by the Kahinda work group (Kahinda et al., 2009, 2008).

The present invention proposes a methodology that combines specific factors of the collection and storage location and of the area of application, specific factors of the hydrographic basin, and a spatial multicriteria analysis applying dynamic and adaptive considerations according to the scenario in question, thus becoming innovative.

Concluding, the presently proposed methodology is different from all the other planning models due to the fact that: 1) adds resources from the specific place in the collection and storage and the location of application, to the inventory of suitability features; 2) lightens the importance of the suitability features, making them dependent on the specific application.

**Summary**

It is the purpose of the present invention to define a methodology to determine locations for rainwater harvesting systems, SRWH, in hydrographic basins.

The area of installation of a SRWH is based on the calculation of the suitability SRWH rate, given by the expression (1):

$$\text{AdequaçãoSAAP} = \sum_{i=1}^{m} w_i^g \left[ \sum_{j=1}^{p} w_j^f F_{j,i} \right] \prod_{k=1}^{q} C_k \qquad (1)$$

Where:

*f* and *g* represent specific factors, for example rainfall, or groups of factors, for example the physical parameters;

$F_{j,i}$ is the standardized value of *j* factor in the *i* group;

$w^f_j$ and $w^g_i$ are the points of *j* factor and *i* group;

$C_k$ is the boolean punctuation of the *k* restriction, which is defined as "1" if the regions must be included in the analysis and "0" otherwise:

*m* is the number of groups, representing the sets of physical, socioeconomic and ecological variables;

*p* are the factors for the physical parameters, "3" for the socioeconomic indicators and "4" for the ecological contexts;

*q* are the restrictions related to class 5 of the "Agricultural areas" factor and to classes 6 and 7 of the "Fire risk" factor.

In a particular embodiment, the determination of the installation area of a SRWH is based on the ranking analysis between the SRWH suitability values, the area of application and the hydric need associated defined by variable $V_0$ and the specific characteristics of the collection and storage location and the area of application, where $V_0$ is defined through the functional relation expressly developed for this invention (2):

$$A_{xy} = f(\emptyset) \times V_0 \quad (2)$$

Where:

$A_{xy}$ represents the minimum water collection and storage area for the SRWH located in site xy;
$f(\phi)$ establishes the functional relation between $A_{xy}$ and $V_0$ considering the specific characteristics of the collection and storage area and the working of the SRWH in terms of water inflow to this collection and storage structure and the ecological discharges thereof.

The balance between inflow and discharges from a SRWH is determined conventionally by the expression (3):

$$V = (Q - q) \times t \quad (3)$$

Where:

*Q* represents the water flow to the SRWH in time *t*;
*q* is the ecological discharge during the same time.

The maximum volume stored in a SRWH will occur for a time $t_M$ during rain, generating a maximum volume $V_M$. On the other hand, the water flow may be represented according to the intensity of the rain (*I*), the area of the drainage basin (*A*) and respective runoff coefficient (*C*) (*Q = CAI*), while the ecological discharge may be expressed in terms of a specific discharge ($q_s$), that is, independent from *A* and *C* (*q = CAqs*).
In these circumstances, the balance expressed in equation (2) is equated to equation (4):

$$V_M = (I - q_s) \times C \times A \times t_M \quad (4)$$

or to equation (5):

$$A = \left( \frac{1}{(I - q_s) \times C \times t_M} \right) \times V_M \quad (5)$$

In order to satisfy the hydric needs ($V_0$) we shall have to capture water in a suitable area ($A_{xy}$) upstream from xy location. Thus we shall have equation (6):

$$A_{xy} = \left(\frac{1}{(I-q_s) \times C \times A \times t_M}\right) \times V_0 \quad (6)$$

whereby the **functional relation established in this invention** and which permits determining the ideal place in the SRWH on local *xy* so as to satisfy the hydric needs of application ($V_0$) is represented by equation (7):

$$f(\emptyset) = \left(\frac{1}{(I-q_s) \times C \times t_M}\right) \quad (7)$$

Equation (7) clearly demonstrates that the functional relation *f(ϕ)* depends on the ecological water flows that are established for the infrastructure (**$q_s$**), on the local rainfall patterns, considering intensity (**$I$**) and the duration of the rains (**$t_M$**), and further, on the use and occupation of the soil in the interior of the collection and storage basin represented by the runoff coefficient(**$C$**).

The variation of f ($\phi$) according to the rainfall pattern means that, in a specific application, in a managerial logic of the hydric resources sustained, it is appropriate to rewrite the terms I e $t_M$ according to the return period of the rains. The conventional expression that determines the relation between the intensity and the duration of a rain is represented by the equation (8):

$$I = at^b \quad (8)$$

Where:

**a** and **b** are the constants that appear in the FID (frequency-intensity-duration) curves (De Paola et al., 2014; Elsebaie, 2012).

The combination of equation (8) with the derivative of the equation (3) permits verifying that the terms $t_M$ and *I-qs* are expressed by the equations (9) and (10):

$$t_M = \left(\frac{q_s}{a \times (1+b)}\right)^{\frac{1}{b}} \quad (9)$$

$$I - q_s = \left(-\frac{b \times q_s}{1+b}\right) \quad (10)$$

The use of equation (2) is absolutely unique in known methods (published) from the selection of locations for the installation of SRWH or other rainwater retention infrastructures. It was integrated to the present methodology as it represents a technical correction present in similar models and consists in a very significant computational advantage, when it is intended to conform the area destined to the storage of rainwater to the necessary volume to retain as defined by the agroforestry application.

The technical correction and the computational advantage are characterized in the following manner:

1) *hydraulic validation of the selection process* (technical correction) - the known methods, when selecting locations for installation based, solely, on environment variables (physical, socioeconomic, etc), do not guarantee that the drainage basin has the capacity (drainage area) to provide the necessary water, since this variable ($A_{xy}$) is not even considered in the models. Some models (for example, Zhang and Song, 2014) combine the use of the CTI index (compound topographic index), to delimit the storage areas with suitable topography, with deciding variables (hydraulic, economic, ecological) destined to optimize the choice of locations covered by the favourable CTI locations. However, there is never established a functional relation between the needs for water for the application and the minimum necessary area to provide (by natural drainage of the basin), for which reason the needs are never guaranteed. In this context, the uncertainty of the results of these models in the face of the guarantee of supply of the hydric needs consists, in our opinion, in a significant technical limitation of these models.

The incorporation of the equation above (2) in the present methodology establishes an objective functional relation between the hydric needs and the dimension of the drainage basin, bridging this limitation in an efficient manner.

*2) Optimization of the computational process of execution (computational advantage)* - The models based on the CTI index invariably opt to select adequate locations for the applications by establishing the objective optimization functions adapted to each application (for example, Appendix A of the article by Zhang and Song, 2014). In practice, the deciding factors adapted to the application are calculated considering the variation of a set of parameters, where the optimization is carried out by determining the maximum value of the deciding function. It is therefore a process that consumes time and computational resources. The use of the functional relation expressly developed for this invention that relates $A_{xy}$ according to $V_0$, described above in equation (2), permits that, by appealing to one sole mathematical operation, the typical location for the installation of the SRWH is determined, thus reducing the time of execution and the computational resources.

The present methodology presents a notable computational advantage.

## General Description

The present invention defines a methodology to determine locations for rainwater harvesting systems, RWH, within hydrographic basins, with the objective of agricultural and forestry applications. This methodology presents great flexibility, since it permits the users to opt for more or less short distances between the collection and storage point and the point to be supplied, as well as the height of the weir, being able to be directed to small green and sustainable infrastructures or even to large engineering constructions, as the large reservoirs.

The methodology consists in a data acquisition stage, that is, the survey of the physical characteristics, the socioeconomic and ecological data of the hydrographic basin in question, the places of collection and storage and the area of application, being all the data registered in thematic georeferenced maps; followed, by a spatial evaluation stage, where a spatial multicriteria analysis is carried out based on the georeferenced maps and on a set of dynamic and adaptive considerations according to the scenario being studied; at the end a classification of possible places for rainwater harvesting systems is obtained.

The present methodology bridges previous problems, since it uses specific qualities of the collection and storage place and of the area of application, and of dynamic and adaptive considerations, according to the scenario in question. In this manner, this methodology permits a great flexibility in the application thereof, assuring an irrigation by gravitational flow, a lesser landscape impact and modest transport costs.

The use of rainwater in agriculture is considered pertinent, since the use of water with excessive anthropogenic nutrients may lead to nitrosamines in the food and their accumulation in the food chain, with serious consequences for the human health (for example, cancer). Enable the planning of more suitable locations, taking into account the characteristics intended by the user, from sustainable green building of small weirs where there is no great impact to the landscape and the ecosystems involved, up to large engineering constructions, such as cement reservoirs.

## Brief description of the drawings

For an easier understanding of the present application some figures are attached, which represent preferred embodiments which, however, do not intend to limit the technique herein disclosed.

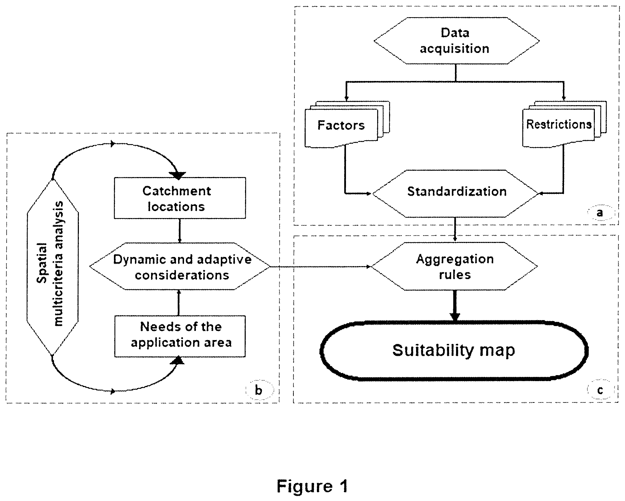

Figure 1: Representation of the functional diagram of the proposed methodology, where:

(a) represents the step of acquisition and processing of data, resulting in georeferenced maps;

(b) represents the analysis step, where a spatial multicriteria analysis is carried out based on the georeferenced maps;

(c) represents the step of classification of possible locations, resulting from dynamic and adaptive considerations according to the scenario in question.

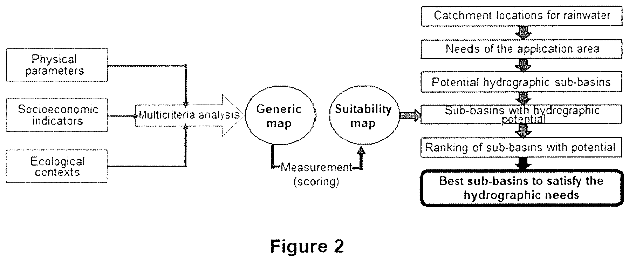

Figure 2: Representation of the flow chart of the several operations.

**Detailed description**

The working model is shown in Figure 1 and it is developed by a Multicriteria Analysis (MCA) implemented in Geographic Information Systems (GIS). The inventory of features for the current MCA is summarized in Table 1. It comprises the physical parameters, the socioeconomic indicators and the ecological contexts assumed as relevant for agro-forestry applications.

**Table 1.** Parameter setting of the multicriteria analysis. The entries with "NoData" represent Boolean restrictions. The numbers between brackets represent points of factors and groups of factors.

| Attribute | Class number | Measurement Unit | Score Suitability | RWH |
|---|---|---|---|---|
| **Physical parameters (3)** | | | | |
| Rainfall (1) | 1 | $mm.yr^{-1}$ | 000 - 100 | 1 |
| | 2 | | 100 - 200 | 2 |
| | 3 | | 200 - 400 | 5 |
| | 4 | | 400 - 600 | 4 |
| | 5 | | 600 - 800 | 3 |
| | 6 | | 800 - 1000 | 3 |
| | 7 | | > 1000 | 1 |
| Curve Number (1) | 1 | Dimensionless | 00 - 20 | 5 |
| | 2 | | 20 - 40 | 4 |
| | 3 | | 40 - 60 | 3 |
| | 4 | | 60 - 80 | 2 |
| | 5 | | 80 - 100 | 1 |
| Soil Texture (1) | 1 | % clay | 0.0 - 06 | 1 |
| | 2 | | 6.1 - 15 | 4 |
| | 3 | | 15.1 - 25 | 5 |
| Soil Depth (1) | 1 | m | > 0.75 | 5 |
| | 2 | | 0.40 - 0.75 | 4 |
| | 3 | | 0.30 - 0.40 | 3 |
| | 4 | | 0.20 - 0.30 | 2 |
| | 5 | | < 0.20 | 1 |
| **Socio-economic indicators (5)** | | | | |
| Population Density (3) | 1 | $inhabitants.ha^{-1}$ | 0.065524 - 0.216527 | 1 |
| | 2 | | 0.216528 - 0.882593 | 2 |
| | 3 | | 0.882594 - 3.820569 | 3 |
| | 4 | | 3.820570 - 16.779809 | 4 |
| | 5 | | 16.779810 - 73.942251 | 5 |
| Agriculture Areas (5) | 1 | Dimensionless | Annual Crop | 5 |
| | 2 | | Pastures | 4 |
| | 3 | | Permanent Crops | 3 |
| | 4 | | Heterogeneous | 1 |
| | 5 | | Other No Data | |

(continued)

| Socio-economic indicators (5) | | | | |
|---|---|---|---|---|
| Water Quality (1) | 1 | mg.L$^{-1}$ (BOD) | < 1 | 5 |
| | 2 | | 0.1 - 1.8 | 4 |
| | 3 | | 1.8 - 2.6 | 3 |
| | 4 | | 2.6 - 3.4 | 2 |
| | 5 | | > 3.4 | 1 |
| | 1 | mg.L$^{-1}$ (COD) | < 2.4 | 5 |
| | 2 | | 02.4 - 11.0 | A 4 |
| | 3 | | 11.0 - 13.0 | 3 |
| | 4 | | 13.0 - 21.0 | 2 |
| | 5 | | > 21 | 1 |
| Ecological contexts (1) | | | | |
| Wildfire Risk (1) | 1 | Dimensionless | Low | 1 |
| | 2 | | Low-moderate | 2 |
| | 3 | | Moderate | 3 |
| | 4 | | High | 4 |
| | 5 | | Very High | 5 |
| | 6 | | Urban NoData | |
| | 7 | | Hidrography NoData | |
| Protected | 1 | Dimensionless | Outside | 1 |
| Attribute | Class number | Measurement Unit | Score Suitability | RWH |
| Areas (1) | 2 | | Inside | 5 |
| Stream | 1 | Dimensionless | Outside | 1 |
| Banks (1) | 2 | | Inside | 5 |
| Terrain | 1 | % | 00% - 05% | 5 |
| Slope (1) | 2 | | 05% - 10% | 4 |
| | 3 | | 10% - 15% | 3 |
| | 4 | | 15% - 30% | 2 |
| | 5 | | > 30% | 1 |

Among the attributes, Table 1 discriminates explanatory factors (attributes with values) from Boolean restrictions (the attributes with the designation entitled "NoData" correspond to regions where the MCA model will not be applied). The explanatory features are divided in numerical classes (for example, rain) and qualitative (for example, types of crops) and, subsequently, the classes receive standardized scores that vary from 1 to 5. The highest scores are attributed to the classes that are most suitable for the installation of a SRWH and the lowest scores to the classes less suitable to this end. The global capacity is defined by a suitability index calculated by the following aggregation rule (1):

$$\text{SAAP Suitability} = \sum_{i=1}^{m} w_i^g \left[ \sum_{j=1}^{p} w_i^f F_{j,i} \right] \prod_{k=1}^{q} C_k$$

$$(1)$$

Where:

*f* and *g* represent specific factors, for example rainfall, or groups of factors, for example, the physical parameters;

$F_{j,i}$ is the standardized value of $j$ factor in the $l$ group;

$w^f_j$ and $w^g_i$ are the points of $j$ factor and $i$ group;

$C_k$ is the Boolean score of the $k$ restriction, which is defined as "1" if the regions must be included in the analysis and "0" in the contrary:

$m$ is the number of groups, representing the sets of physical, socioeconomic and ecological variables;

$p$ are the factors for the physical parameters, "3" for the socioeconomic indicators and "4" for the ecological contexts;

$q$ are the restrictions related to class 5 of the "Agricultural areas" factor and to classes 6 and 7 of the "Fire risk" factor.

Prior to the definition of an area for the installation of a SRWH in a hydrographic basin, the values of $w^f_j$ and $w^g_i$ are defined as 1, since there is no reason a priori to increase the importance of a factor or a particular group of factors. In the following step, $w^f_j$ and $w^g_i$ will be optimized for the specific project.

The area of application and the associated hydric need ($V_0$) for an agroforestry project are defined by the project sponsor or by a hydric resources manager. Having defined a representative value for $V_0$, the sponsors or managers define a rainfall collection and storage basin located upstream from the area of application and a set of sub-basins with $A_{xy}$ capable of providing $V_0$ to this area.

The evaluation of several locations and $A_{xy}$ collection and storage is determined by the functional relation expressly developed for this invention (2):

$$A_{xy} = f(\emptyset) \times V_0 \quad (2)$$

Where:

$A_{xy}$ represents the minimum water collection and storage area for the SRWH located in site xy;
$f(\phi)$ establishes the functional relation between $A_{xy}$ and $V_0$ considering the specific characteristics of the collection and storage area and the working of the SRWH in terms of water flow to this retention structure and ecological discharges from the same.

The balance between inflow and discharges from a SRWH is determined conventionally by the expression (3):

$$V = (Q - q) \times t \quad (3)$$

Where:

$Q$ represents the water flow to the SRWH in time $t$;
$q$ is the ecological discharge during the same time.

The maximum volume stored in a SRWH will occur for a time $t_M$ during rain, generating a maximum volume $V_M$. On the other hand, the water flow may be represented according to the intensity of the rain ($I$), the area of the drainage basin ($A$) and respective runoff coefficient ($C$) $(Q = CAI)$, while the ecological discharge may be expressed in terms of a specific discharge ($q_s$), that is, independent from $A$ and $C$ ($q = CAqs$).

In these circumstances, the balance expressed in equation (2) is equated to equation (4):

$$V_M = (I - q_s) \times C \times A \times t_M \quad (4)$$

or to equation (5):

$$A = \left(\frac{1}{(I-q_s) \times C \times t_M}\right) \times V_M \tag{5}$$

In order to satisfy the hydric needs ($V_0$) we shall have to capture water in a suitable area $A_{xy}$) upstream from xy location. Thus we shall have equation (6):

$$A_{xy} = \left(\frac{1}{(I-q_s) \times C \times A \times t_M}\right) \times V_0 \tag{6}$$

whereby the **functional relation established in this invention** and which permits determining the ideal place in the SRWH on site xy so as to satisfy the hydric needs of application ($V_0$) is represented by equation (7):

$$f(\emptyset) = \left(\frac{1}{(I-q_s) \times C \times t_M}\right) \tag{7}$$

Equation (7) clearly demonstrates that the functional relation $f(\phi)$ depends on the ecological water flows that are established for the infrastructure ($q_s$), on the local rainfall patterns, considering intensity ($I$) and the duration of the rains ($t_M$), and further, on the use and occupation of the soil in the interior of the collection and storage basin represented by the runoff coefficient ($C$).

The variation of f $(\phi)$ according to the rainfall pattern means that, in a specific application, in a managerial logic of the hydric resources sustained, it is appropriate to rewrite the terms I e $t_M$ according to the return period of the rains. The conventional expression that determines the relation between the intensity and the duration of a rain is represented by the equation (8):

$$I = a t^b \tag{8}$$

Where:

**a** and **b** are the constants that appear in the FID (frequency-intensity-duration).

The combination of equation (8) with the derivative of the equation (3) permits verifying that the terms $t_M$ and *I-qs* are expressed by the equations (9) and (10):

$$t_M = \left(\frac{q_s}{a \times (1+b)}\right)^{\frac{1}{b}} \tag{9}$$

$$I - q_s = \left(-\frac{b \times q_s}{1+b}\right) \tag{10}$$

As calculated by the Equation (2), $A_{xy}$ is the minimum area that a basin needs to cover so that the storage volume $V_0$ is directed to the SRWH. This aspect is extremely innovative and unique in these methodologies, it relates the volume to be stored with the minimum drainage area, and not with a possible area, as usually occurs. The implications for the spatial planning and the success of the SRWH are immense, since it is always easier to accommodate a small hydrographic basin in an environmentally suitable zone (for example, Forest), guaranteeing high quality water in the reservoir, than a more large hydrographic basin which necessarily will have mixed occupations and eventually some problems (for example, being close to populations). There will be a series of these sub-basins distributed throughout the rainfall collection and storage zone. The potential sub-basins will be classified in terms of their ability to satisfy the calculated objective.

Subsequently, the sub-basins that are potentially capable are characterized by suitability, based on the map that is oriented to the area of application as well as to the specific restrictions of the collection and storage location or the area of application, also affecting the selection of the best sub-basin to install the SRWH. Regardless of the application, the important specific restrictions of the place of collection and storage are the distance between the point of exit of the water from the sub-basin and the area of application and the dimension/height of the SRWH.

Finally, a ranking analysis is carried out based on the suitability scores, $V_0$ and specific characteristics of the collection and storage location and the area of application, which result identifies the best sub-basin for the installation of the SRWH.

The solution presented was developed from a Geographic Information System (GIS) such as Desktop, in view of the complexity of the data involved and as they are essentially spatial.

The functionalities of data acquisition, the spatial analytic processing of same and the presentation of the results were implemented, relying on proper programming languages, such as python, javaScript.

**Example of determination of favourable locations for the implementation of Rainwater harvesting systems, in hydrographic basins**

In order to put the model into practice, the hydrographic basin of the Ave River was selected. With an area of approximately 1391 $km^2$, it is located in the Northwest of Portugal. The headwaters of the basin, situated in the Cabreira Mountains, are at 1260 m, and the main watercourse has 101 km extension, from the source to the mouth in the Atlantic coast. For this basin, the maximum generic suitability is of 12 to 60. In the Ave river basin, the range is from 16 to 43, not very far from the maximum. The basin is, therefore, heterogeneous as to RWH suitability. The most capable areas are located in the higher sub-basins where the suitability is generally above average. In this study, the rainwater is caught and used for irrigation of crops. For this reason, the socioeconomic indicators receive a higher comparative point 5, followed by the physical parameters 3 and the ecological 1. The explanatory factors of the socioeconomic group also receive specific points, favouring the agricultural areas 5 and population density 3. The remaining variables maintain generic point 1. With these points, the specific suitability map of the project varies from 66 to 330, while in the basin of the Ave river the interval is from 86 to 271.

The area of application is a cropland covering approximately 400 *ha.* The necessary water volume to irrigate one hectare of cultivated land in one year is, in average, $v = 6730$ $m^3$. $ha^{-1}$. $year^{-1}$ (INE, 2011). To irrigate all the cultivated land (a = 400 ha) with the rainwater caught, the volume to be retained is, therefore, $V_0 = v \times A = 2,692,000$ $m^3$. $year^{-1}$. To discharge $V_0$, the sub-basins for rainfall collection and storage must drain an area larger than $A_0 = 277,6$ ha. Using the *software* ArcHydro (ESRI, 2012), from ArcMap (ESRI, 2010), six potential sub-basins with $A_{xy} \geq A_0$ were identified.

The suitability of the sub-basins varies from 153 to 177, and the highest score was attributed to sub-basin 5. Drainage flow contours are available for the long-term at the SNIRH *site* permitting the calculation of the annual discharges in the sub-basins which vary from 1,97 to 12,07 $Mm^3$.$year^{-1}$. Thus, even though the rain zoning has defined which are the six sub-basins potentially capable of providing enough water (2.69 $Mm^3$. $year^{-1}$ 1) for the irrigation project, three hydrographic sub-basins (2, 4 with 5, with discharges V = 2,68 $Mm^3$.$year^{-1}$, V = 2,07 $Mm^3$.$year^{-1}$ e V = 1,97 $Mm^3$.$year^{-1}$, respectively, on Table 2, column 4) are only able to provide 99, 75 e 78% of this resource. Regardless of the total or partial capacity to irrigate the target area, the cost of water transport, mainly related to the settlement and maintenance of the water flows and associated hydraulic infrastructures, is considerably different when the rainwater caught stems from hydrographic sub-basins 5 or 6 of sub-basins 1 or 2, since the distances between the exit collection and storage points to the centroids of the areas of application is also considerably different: approximately 3 km in the first case and 8,1 km in the second case (Table 2, column 6).

**Table 2.** Ranking analysis results

| Sub-basins | Specific project suitability | Score | Drainage flow ($m^3 \cdot Year^{-1}$) | Score | Distance between the water exit and the centroid of the watering area (m) | Score | Height of reservoir wall (m) | Score | Score sum | Ranking |
|---|---|---|---|---|---|---|---|---|---|---|
| 1 | 162 | 4 | 7631319 | 5 | 8148 | 1 | 12 | 4 | 14 | 3 |
| 2 | 163 | 5 | 2687025 | 3 | 8146 | 2 | 18 | 2 | 12 | 4 |
| 3 | 153 | 1 | 4186645 | 4 | 5296 | 3 | 14 | 3 | 11 | 5 |
| 4 | 157 | 3 | 2069005 | 2 | 5287 | 4 | 24 | 1 | 10 | 6 |
| 5 | 177 | 6 | 1973356 | 1 | 3089 | 5 | 6 | 6 | 18 | 2 |
| 6 | 157 | 2 | 12071781 | 6 | 3048 | 6 | 8 | 5 | 19 | 1 |

Apart from the transport costs, the installation of a SRWH upstream of the area of application requires the previous evaluation of the building costs, which are strongly influenced by the local topography. A morphologic characterization of all potentially capable sub-basins, using the *software* ArcHydro, provided values for the minimum height. A reservoir wall must be above the ground so that the rainwater caught (that is, $V_0$) may be stored. These values are represented in column 8 of Table 2 and vary from 6 (sub-basin 5) to 24 m (sub-basin 4). In the first case, the height is relatively small and, therefore, the reservoir wall may eventually be built on land with reduced costs.

In the second case, the most suitable solution, but also the most expensive, is probably a cement wall. Apart from the costs, the landscape integration of a reservoir with height of 6 meters is certainly much easier than the integration of a reservoir with height of 24 meters. Table 2 shows different rankings for potentially capable sub-basins, depending on the evaluation parameter. For example, it shows sub-basin 5 classified as "best" for the parameters "Specific project suitability" or "Height of reservoir wall" (score 6, columns 3 and 9) and "worst" for the parameter "Runoff flow" (score 1, column 5). However, the aggregation of scores defined as the sum of the individual scores identifies sub-basin 6 as the best among all the sub-basins (score 19, column 10). Based on this score, sub-basin 6 is selected as the most adequate (classification 1, column 11) to install the SRWH in the rainfall collection and storage area and irrigate the agricultural area.

This methodology of RWH suitability adds refined components and operational configurations to the existing algorithms, namely a spatial multicriteria analysis based on georeferenced maps and a set of dynamic and adaptive considerations according to the scenario in question.

This methodology was applied in an agricultural project involving the irrigation of a large agricultural area located in a contaminated hydrographic basin (the Ave river basin). The threats to human health related to the use of contaminated water in the irrigation of crops (for example, accumulation of nitrosamines in the food chain, which increases the risk of several types of cancer) contributed to the choice of this basin as example of application of this methodology.

References

Bellu, A., Sanches Fernandes, L.F., Cortes, R.M.V., Pacheco, F.A.L., 2016. A framework model for the dimensioning and allocation of a detention basin system: The case of a flood-prone mountainous watershed. J. Hydrol. 533, 567-580. doi:10.1016/j.jhydrol.2015.12.043

Campisano, A., Modica, C., 2012. Optimal sizing of storage tanks for domestic rainwater harvesting in Sicily. Resour. Conserv. Recycl. 63, 9-16. doi:10.1016/j.resconrec.2012.03.007

Paola, F., Giugni, M., Topa, M., Bucchignani, E., 2014, Intensity-Duration-Frequency (IDF) Rainfall Curves, for Data Series and Climate Projection in African Cities. SpringerPlus, 3, 133. doi:10.1186/2193-1801-3-133.

Domènech, L., Saurí, D., 2011. A comparative appraisal of the use of rainwater harvesting in single and multi-family buildings of the Metropolitan Area of Barcelona (Spain): Social experience, drinking water savings and economic costs. J. Clean. Prod. 19, 598-608. doi:10.1016/j.jclepro.2010.11.010

Elsebaie, I.H., 2012, Developing for Two Regions in Saudi Arabia. Journal of King Saud University-Engineering Sciences, 24, 131-140. doi: dx.doi.org/10.1016/j.jksues.2011.06.001

Ghisi, E., Montibeller, A., Schmidt, R.W., 2006. Potential for potable water savings by using rainwater: An analysis over 62 cities in southern Brazil. Build. Environ. 41, 204-210. doi:10.1016/j.buildenv.2005.01.014

Hashemi, H., Berndtsson, R., Kompani-Zare, M., Persson, M., 2013. Natural vs. artificial groundwater recharge, quantification through inverse modeling. Hydrol. Earth Syst. Sci. 17, 637-650. doi:10.5194/hess-17-637-2013

Hashim, H., Hudzori, A., Yusop, Z., Ho, W.S., 2013. Simulation based programming for optimization of largescale rainwater harvesting system: Malaysia case study. Resour. Conserv. Recycl. 80, 1-9. doi:10.1016/j.resconrec.2013.05.001

Helmreich, B., Horn, H., 2009. Opportunities in rainwater harvesting. Desalination 248, 118-124. doi:10.1016/j.desal.2008.05.046

Imteaz, M.A., Adeboye, O.B., Rayburg, S., Shanableh, A., 2012. Rainwater harvesting potential for southwest Nigeria using daily water balance model. Resour. Conserv. Recycl. 62, 51-55. doi:10.1016/j.resconrec.2012.02.007

Kahinda, J. marc M., Lillie, E.S.B., Taigbenu, A.E., Taute, M., Boroto, R.J., 2008. Developing suitability maps for rainwater harvesting in South Africa. Phys. Chem. Earth 33, 788-799. doi:10.1016/j.pce.2008.06.047

Kahinda, J.M., Taigbenu, A.E., Sejamoholo, B.B.P., Lillie, E.S.B., Boroto, R.J., 2009. A GIS-based decision support system for rainwater harvesting (RHADESS). Phys. Chem. Earth 34, 767-775. doi:10.1016/j.pce.2009.06.011

Kim, H., Han, M., Lee, J.Y., 2012. The application of an analytical probabilistic model for estimating the rainfallrunoff reductions achieved using a rainwater harvesting system. Sci. Total Environ. 424, 213-218. doi:10.1016/j.scitotenv.2012.02.021

Mati et al., 2006. Mapping the Potential of Rainwater Harvesting Technologies in Africa. A GIS Overview on Development Domains for the Continent and Ten Selected Countries. Technical Manual No. 6. World Agroforestry Center (ICRAF), Netherlands Ministry of Foreign Affairs, N.

Mesbah, S.H., Mohammadnia, M., Kowsar, S.A., 2016. Long-term improvement of agricultural vegetation by floodwater spreading in the Gareh Bygone Plain, Iran. In the pursuit of human security, is artificial recharge of groundwater more lucrative than selling oil? Hydrogeol. J. 24, 303-317. doi:10.1007/s10040-015-1354-y

Ouessar, M., Hessel, R., Sghaier, M., Ritsema, C., 2012. WAHARA - Report Series.

Pakparvar, M., Walraevens, K., Cheraghi, S.A.M., Ghahari, G., Cornelis, W., Gabriels, D., Kowsar, S.A., 2016.

Assessment of groundwater recharge influenced by floodwater spreading: an integrated approach with limited accessible data. Hydrol. Sci. J. 1-18. doi:10.1080/02626667.2016.1183164

Palla, A., Gnecco, I., Lanza, L.G., 2011. Non-dimensional design parameters and performance assessment of rainwater harvesting systems. J. Hydrol. 401, 65-76. doi:10.1016/j.jhydrol.2011.02.009

Patrick, E., 1997. Assessing water harvesting suitability. In: FAO, 1997. Remote Sensing and Water Resources. Proceedings of the International Workshop. Food and Agriculture Organization of the United Nations, Rome, Italy.

Rahman, A., Keane, J., Imteaz, M.A., 2012. Rainwater harvesting in Greater Sydney: Water savings, reliability and economic benefits. Resour. Conserv. Recycl. 61, 16-21. doi:10.1016/j.resconrec.2011.12.002

Rockstrom, J., 2000. Water resources management in smallholder farms in Eastern and Southern Africa: An overview. Phys. Chem. Earth, Part B Hydrol. Ocean. Atmos. 25, 275-283. doi:10.1016/S1464-1909(00)00015-0

Sanches Fernandes, L.F., Terêncio, D.P.S., Pacheco, F.A.L., 2015. Rainwater harvesting systems for low demanding applications. Sci. Total Environ. 529, 91-100. doi:10.1016/j.scitotenv.2015.05.061

UNEP, 2009. Rainwater harvesting: a lifeline for human well-being, Rainwater Harvesting: A Lifeline for Human Well-Being, Stockholm Environment Institute. doi:10.1016/j.watres.2007.01.037

Vieira, A.S., Beal, C.D., Ghisi, E., Stewart, R.A., 2014. Energy intensity of rainwater harvesting systems: A review. Renew. Sustain. Energy Rev. 34, 225-242. doi:10.1016/j.rser.2014.03.012

Zhang, X., Song, Y., 2014. Optimization of wetland restoration siting and zoning in flood retention areas of river basins in China: A case study in Mengwa, Huaihe River Basin. Journal of Hydrology 519, 80-93.

## Claims

1. Method for determining locations for rainwater harvesting systems, RWH, in hydrographic basins, **characterized by** the fact that the installation area of a RWH is based on the calculation of the suitability RWH index, which is reached by the expression (1):

$$\text{SAAP Suitability} = \sum_{i=1}^{m} w_i^g \left[ \sum_{j=1}^{p} w_i^f F_{j,i} \right] \prod_{k=1}^{q} C_k \tag{1}$$

Where:

*f* and *g* represent specific factors, for example rainfall, or groups of factors, for example, the physical parameters;
$F_{j,i}$ is the standardized value of *j* factor in the *i* group;
$w_j^f$ and $w_i^g$ are the points of *j* factor and *i* group;
$C_k$ is the Boolean score of the *k* restriction, which is defined as "1" if the regions must be included in the analysis and "0" in the contrary:
*m* is the number of groups, representing the sets of physical, socioeconomic and ecological variables;
*p* are the factors for the physical parameters, "3" is attributed for the socioeconomic indicators and "4" for the ecological contexts, since it refers to an agricultural application;
*q* are the restrictions related to class 5 of the "Agricultural areas" factor and to classes 6 and 7 of the "Fire risk" factor.

2. Method according to claim 1, **characterized by** the fact that the determination of the installation area for a RWH is based on ranking analysis between the RWH suitability values, the area of application and the associated hydric need defined by the variable $V_0$ and the specific features of the collection and storage place and the area of application, where $V_0$ is defined by the relation (2):

$$A_{xy} = f(\emptyset) \times V_0 \quad (2)$$

Where:

$A_{xy}$ represents the minimum water collection and storage area for the SRWH located in site xy;

$f(\phi)$ establishes the functional relation between $A_{xy}$ and $V_0$ considering the specific characteristics of the collection and storage area and the working of the SRWH in terms of water inflow to this collection and storage structure and the ecological discharges from same.

The balance between inflow and discharges from a SRWH is determined conventionally by the expression (3):

$$V = (Q - q) \times t \quad (3)$$

Where:

$Q$ represents the water flow to the SRWH in time $t$;

$q$ is the ecological discharge during the same time.

the maximum volume stored in a SRWH will occur for a time $t_M$ during rain, generating a maximum volume $V_M$. On the other hand, the water flow may be represented according to the intensity of the rain ($I$), the area of the drainage basin ($A$) and respective runoff coefficient ($C$) ($Q = CAI$), while the ecological discharge may be expressed in terms of a specific discharge ($q_s$), that is, independent from A and $C$ ($q = CAqs$).

in these circumstances, the balance expressed in equation (2) is equated to equation (4):

$$V_M = (I - q_s) \times C \times A \times t_M \quad (4)$$

or to equation (5):

$$A = \left( \frac{1}{(I - q_s) \times C \times t_M} \right) \times V_M \quad (5)$$

in order to satisfy the hydric needs ($V_0$) water is caught in a suitable area $A_{xy}$) upstream from xy location, equation (6) :

$$A_{xy} = \left( \frac{1}{(I - q_s) \times C \times A \times t_M} \right) \times V_0 \quad (6)$$

where the functional relation and which permits determining the ideal place in the SRWH on local xy so as to satisfy the hydric needs of application ($V_0$) is represented by equation (7):

$$f(\emptyset) = \left( \frac{1}{(I - q_s) \times C \times t_M} \right) \quad (7)$$

where $f(\phi)$ depends on the ecological water flows that are established for the infrastructure $(q_s)$, on the local rainfall patterns, considering intensity ($I$) and the duration of the rains ($t_M$), and further, on the use and occupation of the soil in the interior of the collection and storage basin represented by the runoff coefficient(C),

the variation of f($\phi$) rewrites the terms I e $t_M$ according to the return period of the rains, the conventional expression that determines the relation between the intensity and the duration of a rain is represented by the equation (8):

$$I = at^b$$
$$(8)$$

Where: a and b are the constants that appear in the FID (frequency-intensity-duration) curves, the combination of equation (8) with the derivative of equation (3) permits verifying that the terms $t_M$ and $I\text{-}q_s$ be expressed by the equations (9) and (10):

$$t_M = \left(\frac{q_s}{a \times (1+b)}\right)^{\frac{1}{b}} \quad (9)$$

$$I - q_s = \left(-\frac{b \times q_s}{1+b}\right) \quad (10).$$

Figure 1

Figure 2

Europäisches
Patentamt

European
Patent Office

Office européen
des brevets

# EUROPEAN SEARCH REPORT

Application Number

EP 19 39 8016

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TERÊNCIO D P S ET AL: "Rainwater harvesting in catchments for agro-forestry uses: A study focused on the balance between sustainability values and storage capacity", SCIENCE OF THE TOTAL ENVIRONMENT, vol. 613, 22 September 2017 (2017-09-22), pages 1079-1092, XP085272534, ISSN: 0048-9697, DOI: 10.1016/J.SCITOTENV.2017.09.198 * pages 1-6, 13 * | 1,2 | INV. G06Q50/02 G06Q50/06 |
| X | TERÊNCIO D P S ET AL: "Improved framework model to allocate optimal rainwater harvesting sites in small watersheds for agro-forestry uses", JOURNAL OF HYDROLOGY, ELSEVIER, AMSTERDAM, NL, vol. 550, 4 May 2017 (2017-05-04), pages 318-330, XP085066759, ISSN: 0022-1694, DOI: 10.1016/J.JHYDROL.2017.05.003 * pages 1-6 * | 1,2 | |

TECHNICAL FIELDS
SEARCHED (IPC)

G06Q

The present search report has been drawn up for all claims

| Place of search | Date of completion of the search | Examiner |
|---|---|---|
| Munich | 22 June 2020 | Diaz Calvo, Sonia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BELLU, A. ; SANCHES FERNANDES, L.F. ; CORTES, R.M.V. ; PACHECO, F.A.L.** A framework model for the dimensioning and allocation of a detention basin system: The case of a flood-prone mountainous watershed. *J. Hydrol.,* 2016, vol. 533, 567-580
- **CAMPISANO, A. ; MODICA, C.** Optimal sizing of storage tanks for domestic rainwater harvesting in Sicily. *Resour. Conserv. Recycl.,* 2012, vol. 63, 9-16
- **PAOLA, F. ; GIUGNI, M. ; TOPA, M. ; BUCCHIGNANI, E.** Intensity-Duration-Frequency (IDF) Rainfall Curves, for Data Series and Climate Projection in African Cities. *SpringerPlus,* 2014, vol. 3, 133
- **DOMÈNECH, L. ; SAURÍ, D.** A comparative appraisal of the use of rainwater harvesting in single and multi-family buildings of the Metropolitan Area of Barcelona (Spain): Social experience, drinking water savings and economic costs. *J. Clean. Prod.,* 2011, vol. 19, 598-608
- **ELSEBAIE, I.H.** Developing for Two Regions in Saudi Arabia. *Journal of King Saud University-Engineering Sciences,* 2012, vol. 24, 131-140
- **GHISI, E. ; MONTIBELLER, A. ; SCHMIDT, R.W.** Potential for potable water savings by using rainwater: An analysis over 62 cities in southern Brazil. *Build. Environ.,* 2006, vol. 41, 204-210
- **HASHEMI, H. ; BERNDTSSON, R. ; KOMPANI-ZARE, M. ; PERSSON, M.** Natural vs. artificial groundwater recharge, quantification through inverse modeling. *Hydrol. Earth Syst. Sci.,* 2013, vol. 17, 637-650
- **HASHIM, H. ; HUDZORI, A. ; YUSOP, Z. ; HO, W.S.** Simulation based programming for optimization of largescale rainwater harvesting system: Malaysia case study. *Resour. Conserv. Recycl.,* 2013, vol. 80, 1-9
- **HELMREICH, B. ; HORN, H.** Opportunities in rainwater harvesting. *Desalination,* 2009, vol. 248, 118-124
- **IMTEAZ, M.A. ; ADEBOYE, O.B. ; RAYBURG, S. ; SHANABLEH, A.** Rainwater harvesting potential for southwest Nigeria using daily water balance model. *Resour. Conserv. Recycl.,* 2012, vol. 62, 51-55

- **KAHINDA, J. MARC M. ; LILLIE, E.S.B. ; TAIGBENU, A.E. ; TAUTE, M. ; BOROTO, R.J.** Developing suitability maps for rainwater harvesting in South Africa. *Phys. Chem. Earth,* 2008, vol. 33, 788-799
- **KAHINDA, J.M. ; TAIGBENU, A.E. ; SEJAMO-HOLO, B.B.P. ; LILLIE, E.S.B. ; BOROTO, R.J.** A GIS-based decision support system for rainwater harvesting (RHADESS). *Phys. Chem. Earth,* 2009, vol. 34, 767-775
- **KIM, H. ; HAN, M. ; LEE, J.Y.** The application of an analytical probabilistic model for estimating the rainfallrunoff reductions achieved using a rainwater harvesting system. *Sci. Total Environ.,* 2012, vol. 424, 213-218
- Mapping the Potential of Rainwater Harvesting Technologies in Africa. A GIS Overview on Development Domains for the Continent and Ten Selected Countries. **MATI et al.** Technical Manual. World Agroforestry Center (ICRAF), 2006
- **MESBAH, S.H. ; MOHAMMADNIA, M. ; KOWSAR, S.A.** Long-term improvement of agricultural vegetation by floodwater spreading in the Gareh Bygone Plain, Iran. In the pursuit of human security, is artificial recharge of groundwater more lucrative than selling oil?. *Hydrogeol. J.,* 2016, vol. 24, 303-317
- **OUESSAR, M. ; HESSEL, R. ; SGHAIER, M. ; RITSEMA, C.** *WAHARA - Report Series,* 2012
- **PAKPARVAR, M. ; WALRAEVENS, K. ; CHERAGHI, S.A.M. ; GHAHARI, G. ; CORNELIS, W. ; GABRIELS, D. ; KOWSAR, S.A.** Assessment of groundwater recharge influenced by floodwater spreading: an integrated approach with limited accessible data. *Hydrol. Sci. J.,* 2016, 1-18
- **PALLA, A. ; GNECCO, I. ; LANZA, L.G.** Non-dimensional design parameters and performance assessment of rainwater harvesting systems. *J. Hydrol.,* 2011, vol. 401, 65-76
- Assessing water harvesting suitability. **PATRICK, E.** Remote Sensing and Water Resources. Proceedings of the International Workshop. Food and Agriculture Organization of the United Nations, 1997
- **RAHMAN, A. ; KEANE, J. ; IMTEAZ, M.A.** Rainwater harvesting in Greater Sydney: Water savings, reliability and economic benefits. *Resour. Conserv. Recycl.,* 2012, vol. 61, 16-21

- **ROCKSTROM, J.** Water resources management in smallholder farms in Eastern and Southern Africa: An overview. *Phys. Chem. Earth, Part B Hydrol. Ocean. Atmos.,* 2000, vol. 25, 275-283
- **SANCHES FERNANDES, L.F. ; TERÊNCIO, D.P.S. ; PACHECO, F.A.L.** Rainwater harvesting systems for low demanding applications. *Sci. Total Environ.,* 2015, vol. 529, 91-100
- Rainwater harvesting: a lifeline for human well-being, Rainwater Harvesting: A Lifeline for Human Well-Being. Stockholm Environment Institute, 2009
- **VIEIRA, A.S. ; BEAL, C.D. ; GHISI, E. ; STEWART, R.A.** Energy intensity of rainwater harvesting systems. *A review. Renew. Sustain. Energy Rev.,* 2014, vol. 34, 225-242
- **ZHANG, X. ; SONG, Y.** Optimization of wetland restoration siting and zoning in flood retention areas of river basins in China: A case study in Mengwa, Huaihe River Basin. *Journal of Hydrology,* 2014, vol. 519, 80-93